Europäisches Patentamt

European Patent Office

Office européen des brevets

(19)

(11)  **EP 1 183 662 B1**

(12)  ## EUROPEAN PATENT SPECIFICATION

(45) Date of publication and mention
of the grant of the patent:
**09.04.2003  Bulletin 2003/15**

(51) Int Cl.⁷: **G08B 13/24**, G01V 15/00,
G01B 7/04

(21) Application number: **00939256.4**

(22) Date of filing: **08.06.2000**

(86) International application number:
**PCT/SE00/01194**

(87) International publication number:
**WO 00/075895 (14.12.2000 Gazette 2000/50)**

(54)  **A METHOD, A SYSTEM, AND A SENSOR FOR REMOTE DETECTION OF OBJECTS, AND A METHOD FOR DETERMINING A LENGTH OF A MAGNETIC ELEMENT**

VERFAHREN, SYSTEM UND SENSOR ZUR FERNDETEKTIERUNG EINES GEGENSTANDES UND VERFAHREN ZUR BESTIMMUNG DER LÄNGE EINES MAGNETISCHEN ELEMENTS

PROCEDE, SYSTEME ET CAPTEUR SERVANT A DETECTER DES OBJETS A DISTANCE, ET PROCEDE DESTINE A DETERMINER LA LONGUEUR D'UN ELEMENT MAGNETIQUE

(84) Designated Contracting States:
**DE FR GB**

(30) Priority:  **09.06.1999  SE 9902173**

(43) Date of publication of application:
**06.03.2002  Bulletin 2002/10**

(73) Proprietor: **RSO CORPORATION N.V.**
**Curaçao (AN)**

(72) Inventor: **Tyren, Carl**
**98000 Monaco (MC)**

(74) Representative: **Petri, Stellan et al**
**Ström & Gulliksson AB**
**Box 41 88**
**203 13 Malmö (SE)**

(56) References cited:
**WO-A1-93/04538          WO-A1-98/36393**
**US-A- 5 532 598**

• **PATENT ABSTRACTS OF JAPAN & JP 04 157 588 A (FUJI ELECTRIC CO LTD) 29 May 1992**

## Description

## Technical Field

The present invention relates to a method, a system, and a sensor for remote detection of objects, an individual object being provided with a sensor comprising at least one magnetic element representing an identity of the sensor, wherein a first electromagnetic signal is generated for exciting the magnetic element to produce a second electromagnetic signal, an amplitude of which is modulated by a magnetic field, and wherein a reply signal is produced by demodulating the second electromagnetic signal. The invention also relates to a method of determining a length of a magnetic element by using a similar principle.

## Description of the Prior Art

Many applications require a reliable and contactless detection of the presence, identity or position of objects within a detection zone. Common examples are for instance price labeling of commercial articles, identification of components in production lines, identification of material type at recycling plants or electronic article surveillance in e. g. shops.

For some applications it is sufficient to detect the presence of the object or article. One example is a simple electronic article surveillance system, which is arranged to provide an alarm signal, once a protected article is carried into a detection zone. Such a simple application uses one single sensor element in the form of a thin metal strip or wire with magnetic properties. The sensor element may be detected magnetically by means of arc-shaped magnetic generators/detectors, which expose the sensor element to an alternating magnetic field, that affects a physical property of the sensor element. Use is often made of the fact that the alternating magnetic field causes a periodical switch of the magnetic momentum of dipole of the sensor element, which is also known as Barkhausen jumps. Sensors of this kind are for instance disclosed in US-A-5 496 611, EP-A-0 710 923 and EP-A-0 716 393.

A different single-element sensor technology is described in WO97/29463 and WO97/29464, wherein each sensor comprises a wire-shaped element of amorphous or nano-crystalline metal alloy. An important feature of the amorphous or nano-crystalline metal alloy is that the permeability thereof may be controlled by an alternating magnetic modulating field. Through a physical effect known as Giant Magnetoimpedance, the amplitude of an electromagnetic reply signal from the sensor is modulated by the magnetic modulating field, when the sensor is excited by an electromagnetic interrogation signal. The modulation in amplitude of the reply signal is detected and used for determining the presence of the sensor in the detection zone. A similar application is shown in WO98/36393, where very thin amorphous or nano-crystalline wires are used as sensor elements. These wires (also known as microwires) have a diameter of less than 30 μm, preferably 5-15 μm.

None of the electronic article surveillance applications described above provides a remotely detectable identity for each sensor. However, for advanced applications it is necessary to provide such identity information, representing e.g. an article number, serial number, material code etc for the respective object, to which each sensor is attached. Such applications are disclosed in WO88/01427, wherein each sensor or marker is provided with a number of magnetostrictive strips or ribbons made of an amorphous ferromagnetic material and arranged in predetermined angular relationships or at predetermined distances from each other. The identity of such a sensor is represented by the predetermined relationships as well as the respective type of individual sensor elements. The sensor elements are excitable to mechanical resonance by magnetic energy. The magnetic signals generated by the resonating sensor elements may be detected magnetically or inductively.

A similar system is described in WO93/14478, wherein the sensors or markers are provided with a number of electrical resonant circuits, each of which is inductively coupled to a respective magnetic sensor element. Each electrical resonant circuit is excited to oscillate electrically, and the resonant frequency thereof is controllable, through the permeability of the magnetic element, by an external magnetic field, wherein a simultaneous detection of several identical sensors is possible.

Finally, JP-4157588 A describes a magnetic marker with four amorphous magnetic thin wires that are used to create an identity of the marker. The wires in the marker are of different lengths where the leftmost wire is the longest and the rightmost wire is the shortest. The wires are given reference magnetic characteristics by means of heat treatment and are thereafter cut up into different lengths.

In summary, prior art sensors for remote detection of objects are either of a single-element type, allowing only the presence of each sensor to be detected, or of a multi-element type, allowing also an identity of each sensor to be detected. Single-element sensors are easier to design and produce and therefore have a lower unit cost. On the other hand, multi-element sensors require a supporting carrier (particularly for mechanically resonating sensor elements) and/or capacitive and inductive components (for the electric resonant circuit versions). Naturally, this implies a higher cost per unit. Additionally, since the multi-element sensors described above mainly operate by a magnetic or inductive link, the operating distance of the detection system is quite narrow.

## Summary of the Invention

An objective of the present invention is to provide a method, a system, and a sensor for remote detection of objects, which are capable of determining an identity of the sensor attached to an individual object at a substantially lower cost than the prior art approaches. A further objective of the present invention is to provide a system for detecting the identity of individual sensors/objects with an operating distance, which is far better than that of the prior art.

The objectives have been achieved by the provision of a method, a system, and a sensor, which resemble the ones described in aforesaid WO97/29463 WO97/29464, and WO98/3639 (i.e., use electromagnetic excitation and detection, and a magnetic field for modulating the reply signal from the sensor, which comprises at least one thin magnetic wire-shaped element of an amorphous or nano-crystalline metal alloy), but which allow each sensor to represent an identity. This is made possible by varying the amplitude of the magnetic modulating field and detecting a corresponding variation in amplitude of the reply signal from the sensor. These variations are used for determining a geometric property of the or each magnetic element of the sensor, preferably a length of the element. Since the demagnetizing factor of a wire-shaped magnetic element depends on the length of the element, and since the amplitude of the reply signal in turn depends on the demagnetizing factor, it is possible to determine the length of the magnetic element from the detected variations in amplitude. The identity of the sensor is provided by the length of the magnetic element; elements of a first length represent a first identity, elements of a second length represents a second identity, etc. Advantageously, each sensor comprises more than one magnetic element, arranged in a predetermined spatial relationship in relation to each other. By using elements of different lengths, the identity of the sensor may be represented not only by these lengths but also by the spatial relationship among the elements.

Other objectives, features and advantages of the present invention appear from the following detailed disclosure, from the drawings as well from the appended patent claims.

## Brief Description of the Drawings

A preferred embodiment of the present invention will now be described with reference to the accompanying drawings, in which:

FIG 1 illustrates a system for remote detection of objects, in which the method and sensor according to the present invention may be applied,

FIG 2 is a schematic illustration of a first embodiment of a sensor according to the invention, where the magnetic elements have different length and are arranged at an angle to each other,

FIG 3 is a schematic illustration of another embodiment of the sensor, where the magnetic sensor elements still have different lengths but are arranged in parallel to each other, separated by respective distances in a direction transversal to the longitudinal extension of the elements,

FIG 4 is a diagram, which illustrates the fundamental principle, upon which the present invasion is based, and

FIG 5 is a diagram, which shows experimental results obtained for a set of magnetic elements having different lengths.

## Detailed Disclosure of the Invention

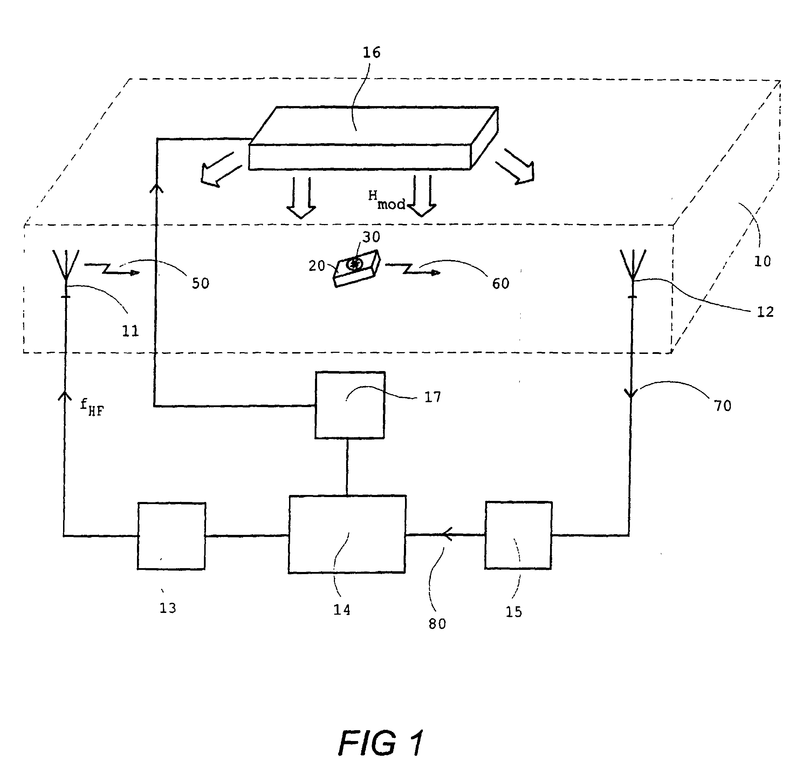

FIG 1 illustrates an exemplary embodiment of a system for remote detection of objects, in which a sensor 30 is used according to one embodiment of the present invention. A transmitter antenna 11 and a receiver antenna 12 are arranged in a detection zone 10. The transmitter antenna 11 is operatively connected to an output stage 13, which in turn is connected to a controller 14. The output stage comprises various commercially available driving and amplifying circuits and means for generating an alternating electric current of high frequency $f_{HF}$, said current flowing back and forth through the transmitter antenna 11 when supplied thereto, wherein a high-frequency electromagnetic field is generated around the transmitter antenna. This electromagnetic field is used, as will be described in more detail below, for exciting a sensor 30 present in the detection zone 10, so that the sensor will transmit, at the reception of a first electromagnetic signal 50 from the transmitter antenna 11, a second electromagnetic signal 60, which is received by the receiver antenna 12 and transformed into a corresponding electric signal 70.

The receiver antenna 12 is operatively connected to an input stage 15, which comprises conventional means with amplifying and signal processing functions, such as bandpass filtering and amplifying circuits. The input stage 15 also comprises means for demodulating the received signal 70 and supplying it, as a reply signal 80, to the controller 14.

The transmitter antenna 11 as well as the receiver antenna 12 thus have the purpose of converting, in a known way, between an electrical signal of high frequency and an electromagnetic signal. Preferably, the antennas are helically formed antennas with rotating polarization (for optimal coverage in all directions), or alternatively conventional end-fed or center-fed halfwave whip antennas, but other known antenna types are equally possible.

The detection zone 10 is additionally provided with means 16, such as a coil, for generating a magnetic modulating field $H_{mod}$. The means 16 is connected to the controller 14 via a driving stage 17. The driving stage 17 comprises means for generating a modulating current $I_{mod}$, which is supplied to the means 16, wherein the magnetic modulating field $H_{mod}$ is generated in essential portions of the detection zone 10. The magnetic modulating field $H_{mod}$ may have a frequency of about 500-800 Hz, and the electromagnetic excitation and reply signals may have a frequency within the GHz band, such as 1.3 GHz or 2.45 GHz. Frequencies outside these ranges are however also possible.

An object 20, which has been schematically illustrated in FIG 1 in the form of a box-shaped package, is provided with a sensor 30 according to the invention, comprising at least two magnetic sensor elements 31-34, which are arranged in a mutual relationship and represent an identity of the sensor, or of the object 20, to which the sensor is attached. The sensor elements are electromagnetically detectable and comprise a magnetic material, the permeability of which is controllable by a magnetic field and the high-frequency impedance of which depends on said permeability, according to an effect commonly known as Gigant Magneto-Impedance. This effect causes a modulation in amplitude of the second electromagnetic signal 60 transmitted from the sensor 30 and received by the receiver antenna 12 as the signal 70. The amplitude is modulated by the magnetic modulating field $H_{mod}$.

A system similar to the one described above is thoroughly disclosed in WO97/29463, WO97/29464, and WO98/36393, all of which are fully incorporated herein by reference.

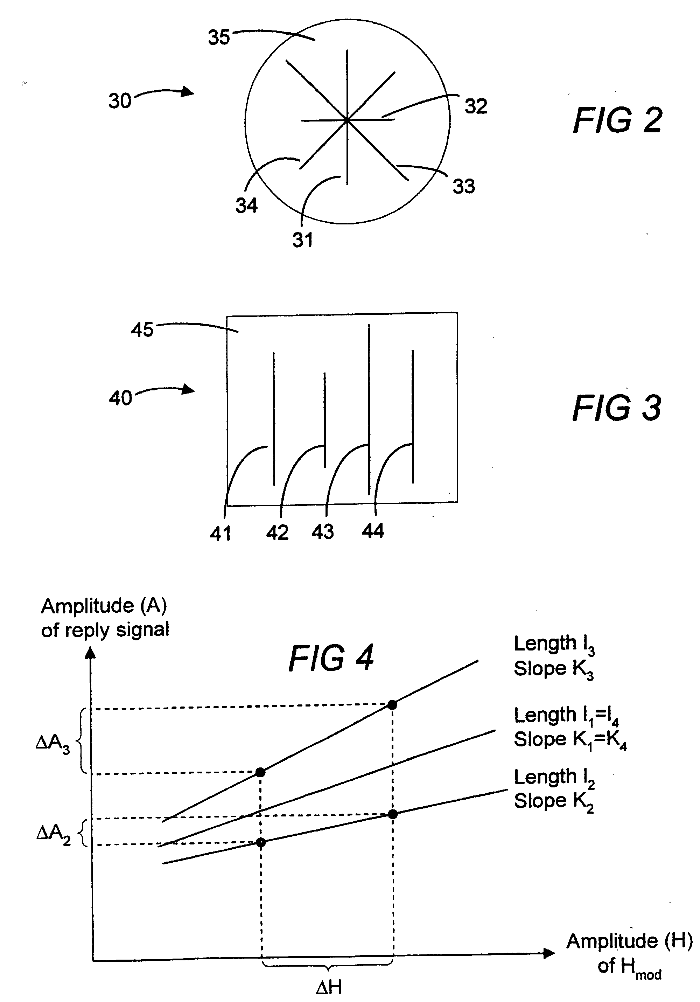

A first embodiment of the sensor 30 is illustrated in FIG 2. The sensor 30 comprises a sensor body 35, such as a thin sheet of paper or plastics, onto which four sensor elements 31, 32, 33, 34, are mounted by e.g. adhesion. Alternatively, the four elements 31-34 may be directly integrated into the material of the object 20, to which the sensor is mounted, as will be described in more detail below.

The material of the sensor elements 31-34 may be essentially identical to the ones described in the above-mentioned WO98/36393. In other words, in the embodiment of FIG 2, the sensor elements 31-34 are made from a cobalt-rich amorphous metal alloy, such as $(Fe_{0.06}Co_{0.94})_{72.5}Si_{12.5}B_{15}$. The sensor elements are formed as very thin metal wires with a length of about 5-100 mm and a typical transversal diameter of between 7 and 55 $\mu$m. An important feature of the invention is that the individual elements 31-34 have different and predetermined lengths $l_1$-$l_4$, as will be described in more detail below. Furthermore, the wires may be provided with a thin coating of glass or another dielectric material, the thickness of which is preferably less than the thickness (diameter) of the metal wire core. Such a wire is commonly referred to as a microwire and is produced by rapidly pulling a molten metal alloy and a surrounding molten glass tube.

Alternatively, the material of the sensor elements 31-34 may be nanocrystalline rather than amorphous. Furthermore, the glass coating may be dispensed with, and the thickness (transversal diameter) may be larger than for the preferred embodiment. Transversal diameters of between 100 and 200 $\mu$m have proven useful, particularly about 125 $\mu$m, as shown in WO97/29463 and WO97/29464. However, such wires are not referred to as microwires and are produced in other ways than the one mentioned above, as is well known per se in the technical field of magnetic sensor elements. In summary, the sensor of the present invention may comprise magnetic sensor elements of various kinds, as defined by the appended independent sensor claim.

According to the embodiment of FIG 2, the four sensor elements 31-34 are arranged at a certain angle to each other. As previously mentioned, the sensor elements 31-34 may be mounted to a carrier 35, such as an adhesive label, or alternatively attached directly to the related object 20, for instance by adhesion. A further alternative is to sew or weave the sensor elements into or onto e.g. an article of clothing or another article of merchandise. In such a case the identity of the sensor may represent an article class or type. Yet another alternative is to integrate the sensor elements into a packaging material, such as cardboard, paper or plastic film, or into an article of recycling (e.g. a plastic container, a glass bottle, a cardboard package, etc.). In such cases, the identity of the sensor may represent e.g. a type of material for each recycling article.

The identity of the sensor 30 (or its related object 20) is partly provided by the value of the angular deviation between the sensor elements 31-34. When assembling the sensor, the sensor elements are arranged according to one specific predetermined orientation selected from a set of such predetermined orientations.

A second embodiment of the sensor is shown in FIG 3. Here, the sensor 40 comprises a rectangular carrier 45, on which four magnetic sensor elements 41, 42, 43, 44 are mounted. The magnetic sensor elements 41-44 may be similar or identical to the ones described in previous sections in relation to FIG 2. However, in contrast to FIG 2, the sensor elements 41-44 of the sensor 40 shown in FIG 3 are arranged in parallel to each other with a certain transversal displacement between adjacent elements. In similarity with the individual sensor elements 31-34 of FIG 2, the sensor elements 41-44 in FIG 3 have different lengths, which together form an identity of this sensor 40. In contrast to the sensor 30 of Fig 2, however, the sensor 40 of FIG 3 does not contain any additional information in the spatial relationship between the sensor elements 41-44.

A method for determining the length of the individual magnetic sensor elements will now be described with reference to FIG 4. The description below is made with reference to the sensor 30 shown in FIG 2. As previously mentioned, one aspect of the present invention is that the lengths of individual magnetic sensor elements 31-34 may be used as coding parameters for forming an identity of the sensor 30. These lengths may be determined through a magnetic property on the element, known as the demagnetizing factor. The demagnetizing factor represents the intrinsic magnetization of the magnetic element in relation to an external magnetic field and depends, inter alia, on the length and the cross-sectional area of the element, as set out below.

Assuming that the magnetic sensor element is a wire having a length c and a diameter a, the longitudinal demagnetizing factor $N_c$ of the element may be expressed as:

$$N_c = \frac{4\pi}{r^2 - 1}\left[\frac{r}{\sqrt{r^2 - 1}}\ln\left[r + \sqrt{r^2 - 1}\right] - 1\right],$$

where $r = c/a.$

The transverse demagnetizing factor $N_a$ may be obtained through the expression:

$$N_c + 2N_a = 4\pi.$$

As previously described, the impedance of the magnetic element will depend on the permeability of the element, and when the permeability is varied by way of the magnetic modulating field, the impedance will vary accordingly, and, ultimately, the amplitude of the electromagnetic reply signal will be modulated by the magnetic modulating field.

The energy of the amplitude modulation will depend not only on the amplitude of the magnetic modulating field but also on the high-frequency (HF) energy of the electromagnetic excitation signal and on the length of the element. The reason why the length will have an influence on the amplitude modulation energy is because the amplitude modulation is due to the permeability, which in turn depends on the demagnetizing factor, which, ultimately, depends on the length of the element, as appears from the formula above.

Consequently, by increasing the amplitude of the magnetic modulating field, the amplitude modulation energy of the reply signal will increase according to an essentially linear factor, which depends on the length of the element.

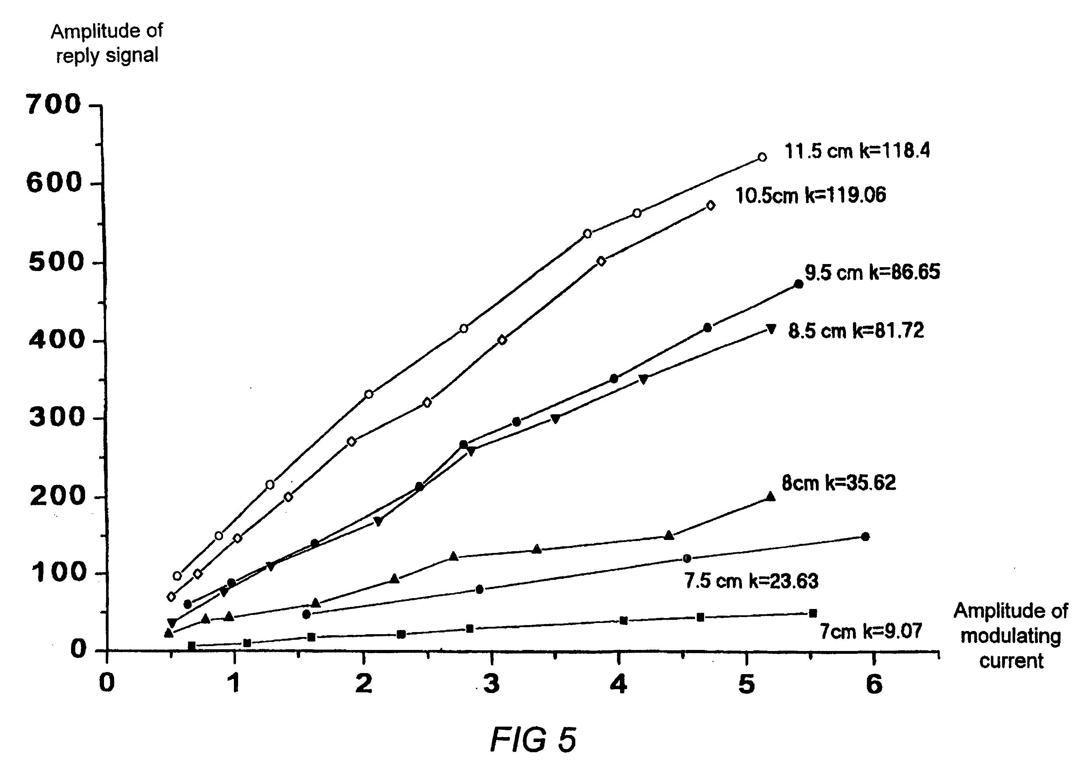

The essentially linear relation between the amplitude of the modulating field and the amplitude modulation energy of the reply signal has been experimentally verified, as shown in FIG 5.

In FIG 5, the amplitude of the reply signal is plotted against increasing amplitude of the modulating current used for generating the magnetic modulating field, for seven elements having different lengths (7 cm, 7.5 cm, 8 cm, 8.5 cm, 9.5 cm, 10.5 cm and 11.5 cm). A slope K is indicated for each length.

An application of the above findings is schematically illustrated in FIG 4, where the respective slopes $K_1$-$K_4$ are illustrated for the four magnetic elements 31-34 of the sensor 30 shown in FIG 2. The first magnetic element 31 has a length $l_1$, which is identical to the length $l_4$ of the fourth magnetic element 34. Furthermore, the second magnetic element 32 has a length $l_2$, which is shorter than the length $l_1=l_4$ of the first and fourth magnetic elements 31 and 34. Finally, the length $l_3$ of the third magnetic element 33 is larger than the length $l_1$, $l_2$ and $l_4$ of the respective magnetic elements 31, 32, 34.

As described above, the demagnetizing factor of the first magnetic element 31 will depend on the length $l_1$ of the magnetic element and will cause the amplitude of the reply signal from this element to be linearly dependent (slope $K_1$) of the amplitude of the magnetic modulating field $H_{mod}$. Since the first and fourth magnetic elements 31, 34 have identical lengths $l_1 = l_4$, the slopes $K_1$ and $K_4$ thereof will be identical, as illustrated by one common linear slope in FIG 4. Furthermore, since the length $l_2$ of the second magnetic element 32 is less than the aforesaid lengths $l_1 = l_4$, the slope $K_2$ of the second magnetic element 32 will be less dependent of the amplitude of the magnetic modulating field $H_{mod}$, as shown in FIG 4. Correspondingly, the slope $K_3$ of the longest magnetic element 33 will have the strongest dependence of the amplitude of the magnetic modulating field $H_{mod}$, as illustrated by the uppermost slope $K_3$ in FIG 4.

The lengths $l_1$-$l_4$ of the magnetic elements 31-34 are determined as follows. The amplitude H of the magnetic modulating field $H_{mod}$ is varied from a first value to a second value, i.e. by increasing the amplitude by a value $\Delta H$. The amplitude A of the demodulated reply signal 80 is determined for the first and second amplitudes of the magnetic modulating field $H_{mod}$, i.e. the change $\Delta A$ in amplitude of the reply signal is determined in response to the change $\Delta H$ in amplitude of the magnetic modulating field $H_{mod}$. Then, the slope K is calculated as K = $\Delta A/\Delta H$. For instance, the slope $K_3$ of the third element 33 is calculated as $\Delta A_3/\Delta H$, while the slope $K_2$ of the second magnetic element 32 is calculated as $\Delta A_2/\Delta H$. Since there is a predetermined relationship between the slope K and the respective length of the magnetic element, the lengths $l_1$-$l_4$ of the magnetic elements 31-34 may be calculated from the determined slopes

$K_1$-$K_4$. Preferably, the controller 14 is provided with a memory for storing cross-reference data for determining the lengths $l_1$-$l_4$ from the slopes $K_1$-$K_4$. Furthermore, the memory of the controller 14 may have a second cross-reference table for mapping element lengths to code values, e.g. so that an element length $l_1$ corresponds to a first code value, while a length $l_2$ corresponds to a second code value, etc. As previously mentioned, the angular deviations between the magnetic elements 31-34 may provide further code values, so that a total code of the sensor 30 may be formed by the individual lengths $l_1$-$l_4$ as well as the angular relationship between the elements 31-34.

The momentary amplitude H of the magnetic modulating field $H_{mod}$ may be conveniently determined from the momentary amplitude of the modulating current supplied from the driving stage 17 to the means (coil) 16 for generating the magnetic modulating field $H_{mod}$.

The lengths of the magnetic elements 41-44 of the sensor 40 shown in FIG 3 may be determined in a way similar to the one described above for the sensor 30 of FIG 2.

The fundamental principle of the present invention may also be used as a method for determining a length of a magnetic element. According to such a method, the following steps are taken:

1. The magnetic element is exposed to electromagnetic radiation for exciting the element.
2. The magnetic element is exposed to a magnetic field having a first amplitude.
3. A first amplitude is detected for an electromagnetic reply signal from the magnetic element.
4. The magnetic element is then exposed to a magnetic field having a second amplitude.
5. A second amplitude is detected for an electromagnetic reply signal from the magnetic element.
6. A first difference is determined between the first and second amplitudes of the electromagnetic reply signal.
7. A second difference is determined between the first and second amplitudes of the magnetic field.
8. The length of the magnetic element is ultimately determined from the first and second differences, preferably by dividing the first difference by the second difference and comparing the value thus obtained to a set of prestored values representing the demagnetizing factors related to magnetic elements of different predetermined lengths.

Within the scope of the present invention, other properties than the length of each magnetic element may be used as coding parameters for the above purpose. It has already been mentioned that the intrinsic magnetization, and therefore the demagnetizing factor, depends not only of the element length but also of its diameter or cross-sectional area. Consequently, the diameter of the element may be used for coding purposes, i.e. by using magnetic sensor elements of different cross-sectional areas (different thickness) as replacement for and/or in addition to the magnetic elements 31-34 and 41-44 described with reference to FIGs 2 and 3.

The present invention has been described above by way of a few exemplary embodiments. However, other embodiments than the ones described above are possible within the scope of the invention, as defined by the appended independent patent claims.

**Claims**

1. A method for remote detection of objects, an individual object (20) being provided with a sensor (30) comprising at least one magnetic element (31-34) having a predetermined geometrical shape and representing an identity of the sensor, wherein a first electromagnetic signal (50) is generated for exciting the or each magnetic element to produce a second electromagnetic signal (60), an amplitude of which is modulated by a magnetic field (Hmod), and wherein a reply signal (80) is produced by demodulating the second electromagnetic signal (60, 70), **characterized by** the steps of

a) detecting a variation in amplitude ($\Delta A$) of the reply signal (80) in response to a variation in amplitude ($\Delta H$) of the magnetic field (Hmod),
b) determining, from the result of step a), the length and diameter of the or each magnetic element (31-34), and
c) determining, from the result of step b), an identity of the sensor (20).

2. A method according to any preceding claim, wherein the or each magnetic element (31-34) is formed as a wire of an amorphous or nano-crystalline metal alloy.

3. A method according to any preceding claim, wherein the sensor (20) comprises at least two magnetic elements (31-34) arranged in a predetermined spatial relationship in relation to each other.

4. A method according to claim 3, wherein said at least two magnetic elements (31-34) have different lengths.

5. A method according to claim 3 or 4, wherein said at least two magnetic elements (41-44) are arranged in parallel to each other in the sensor (40).

6. A method according to any of claims 3-4, wherein said at least two magnetic elements (31-34) are arranged at an angle to each other.

7. A system for remote detection of objects, where an individual object (20) is provided with a sensor (30) comprising at least one magnetic sensor element (31-34), the system comprising transmitter means (11, 13) for transmitting a first electromagnetic signal (50) in a detection zone (10); receiver means (12, 15) for receiving a second electromagnetic signal (60, 70), generated by the sensor in response to the first electromagnetic signal from the transmitter means; modulating means (16) for generating a magnetic field (Hmod) for modulating the second electromagnetic signal during the generation thereof by the sensor; and demodulating means (15) for producing a reply signal (80) by demodulating the second electromagnetic signal (70) as received by the receiver means, **characterized by**

   processing means (14) for: detecting a variation in amplitude ($\Delta A$) of the reply signal (80) in response to a variation in amplitude ($\Delta H$) of the magnetic field (Hmod) ; determining, from the variation in amplitude thus detected, the length and diameter of the or each magnetic element (31-34); and determining, from the geometric property thus determined, an identity of the sensor (30).

8. A method of determining a length (11-14) and a diameter of an elongated magnetic element (31-34), **characterized by**

   exposing the magnetic element (31-34) to electromagnetic radiation (50),
   exposing the magnetic element to a magnetic field (Hmod) having a first amplitude,
   detecting a first amplitude of an electromagnetic reply signal (60, 70) from the magnetic element,
   exposing the magnetic element to a magnetic field having a second amplitude,
   detecting a second amplitude of an electromagnetic reply signal from the magnetic element,
   determining a first difference ($\Delta A$) between the first and second amplitudes of the electromagnetic reply signal,
   determining a second difference ($\Delta H$) between the first and second amplitudes of the magnetic field, and
   determining the length (11-14) and the diameter of the magnetic element (31, 34) from said first and second differences.

9. A sensor (30) for remote detection of objects, comprising at least two magnetic elements (31-34), which are arranged in a spatial relationship representing an identity of the sensor, or of an object (20) to which the sensor is attached, said magnetic elements being electromagnetically detectable, **characterized in that**

   each magnetic element (31-34) is formed as a wire made from an amorphous or nano-crystalline metal alloy and having a length (11-14), which is different from the length of at least one other magnetic element of the sensor (30), and
   at least one of the magnetic elements has a diameter, which is different from the diameter of at least one other magnetic element of the sensor (30);

   wherein the length and diameter of each element are used for forming the identity of the sensor.

10. A sensor according to claim 9, wherein the diameter of each magnetic element (31-34) is 100-200 µm.

11. A sensor according to claim 9, wherein the diameter of each magnetic element (31-34) is 7-55 µm.

12. A sensor according to any of claims 9-11, wherein each magnetic element (31-34) is provided with a coating of dielectric material, such as glass.

13. A sensor according to any of claims 9-13, wherein the amorphous or nano-crystalline metal alloy of each magnetic element (31-34) exhibits a Giant Magneto-impedance-effect when exposed to electromagnetic energy (50) of high frequency and magnetic energy (Hmod) of lower frequency.

14. A sensor according to any of claims 9-13, wherein the amorphous or nano-crystalline metal alloy of each magnetic element (31-34) has a majority ratio of cobalt.

**15.** A sensor according to any of claims 9-14, wherein the composition of the amorphous or nano-crystalline metal alloy of each magnetic element (31-34) is $(Fe_{0.06}Co_{0.94})_{72.5}Si_{12.5}B_{15}$.

**16.** A sensor according to any of claims 9-15, wherein the magnetic elements (41-44) are arranged in parallel to each other in the sensor (40).

**17.** A sensor according to any of claims 9-16, wherein the magnetic elements (31-34) are arranged at an angle to each other in the sensor (30).

**Patentansprüche**

**1.** Verfahren zum Ferndetektieren von Objekten, wobei ein einzelnes Objekt (20) mit einem Sensor (30) versehen ist, der wenigstens ein magnetisches Element (31 - 34), das eine vorbestimmte geometrische Form hat und eine Identität des Sensors darstellt, aufweist, wobei ein erstes elektromagnetisches Signal (50) zum Anregen des oder jedes magnetischen Elementes erzeugt wird, um ein zweites elektromagnetisches Signal (60) zu erzeugen, dessen Amplitude durch ein magnetisches Feld (Hmod) moduliert wird, und wobei ein Antwortsignal (80) erzeugt wird, indem das zweite elektromagnetische Signal (60, 70) demoduliert wird, **gekennzeichnet durch** die Schritte

a) Erfassen einer Variation in der Amplitude (ΔA) des Antwortsignals (80) in Antwort auf eine Variation in der Amplitude (ΔH) des magnetischen Feldes (Hmod),

b) Bestimmen, aus dem Ergebnis des Schrittes a), der Länge und des Durchmessers des oder jedes magnetischen Elemente (31 - 34), und

c) Bestimmen, aus dem Ergebnis des Schrittes b), einer Identität des Sensors (20).

**2.** Verfahren nach einem vorangehenden Anspruch, bei dem das oder jedes magnetische Element (31 - 34) als ein Draht aus einer amorphen oder nanokristallinen Metallegierung gebildet ist.

**3.** Verfahren nach einem vorangehenden Anspruch, bei dem der Sensor (20) wenigstens zwei magnetische Elemente (31 - 34) aufweist, die in einer vorbestimmten Lagebeziehung in bezug aufeinander angeordnet sind.

**4.** Verfahren nach Anspruch 3, bei dem wenigstens zwei magnetische Elemente (31 - 34) unterschiedliche Längen haben.

**5.** Verfahren nach Anspruch 3 oder 4, bei dem die wenigstens zwei magnetischen Elemente (41- 44) parallel zueinander in dem Sensor (40) angeordnet sind.

**6.** Verfahren nach einem der Ansprüche 3 bis 4, bei dem die wenigstens zwei magnetischen Elemente (31 - 34) unter einem Winkel zueinander angeordnet sind.

**7.** System für die Femdetektierung von Objekten, wobei ein einzelnes Objekt (20) mit einem Sensor (30) versehen ist, welcher wenigstens ein magnetisches Sensorelement (31 - 34) aufweist, wobei das System eine Übertragungseinrichtung (11, 13) zum Übertragen eines ersten elektromagnetischen Signals (50) in eine Erfassungszone (10); eine Empfängereinrichtung (12, 15) zum Empfangen eines zweiten elektromagnetischen Signals (60, 70), das von dem Sensor in Antwort auf das erste elektromagnetische Signal von der Übertragungseinrichtung erzeugt worden ist; eine Moduliereinrichtung (16) zum Erzeugen eines magnetischen Feldes (Hmod) zum Modulieren des zweiten elektromagnetischen Signals während dessen Erzeugung durch den Sensor; und eine Demoduliereinrichtung (15) zum Erzeugen eines Antwortsignals (80), in dem das zweite elektromagnetische Signal (70), wie es von der Empfängereinrichtung empfangen worden ist, demoduliert wird, aufweist, **gekennzeichnet durch** eine Verarbeitungseinrichtung (14) zum: Erfassen einer Variation in der Amplitude (ΔA) des Antwortsignals (80) in Antwort auf eine Variation in der Amplitude (ΔH) des magnetischen Feldes (Hmod); Bestimmen, aus der so erfaßten Variation in der Amplitude, der Länge und des Durchmessers des oder jedes magnetischen Elemente (31 - 34); und Bestimmen, aus der so festgestellten geometrischen Eigenschaft, einer Identität des Sensors (30).

**8.** Verfahren zum Bestimmen einer Länge (11 - 14) und eines Durchmessers eines länglichen magnetischen Elementes (31 - 34), **gekennzeichnet durch**

Aussetzen des magnetischen Elementes (31 - 34) elektromagnetischer Strahlung (50),

Aussetzen des magnetischen Elementes einem magnetischen Feld (Hmod) mit einer ersten Amplitude,

Erfassen einer ersten Amplitude eines elektromagnetischen Antwortsignals (60, 70) von dem magnetischen Element,

Aussetzen des magnetischen Elementes einem magnetischen Feld mit einer zweiten Amplitude,

Erfassen einer zweiten Amplitude eines elektromagnetischen Antwortsignals von dem magnetischen Element,

Bestimmen einer ersten Differenz ($\Delta$A) zwischen der ersten und zweiten Amplitude des elektromagnetischen Antwortsignals,

Bestimmen einer zweiten Differenz ($\Delta$H) zwischen der ersten und zweiten Amplitude des magnetischen Feldes, und

Bestimmen der Länge (11 -14) und des Durchmessers des magnetischen Elementes (31, 34) aus der ersten und der zweiten Differenz.

9. Sensor (30) zur Ferndetektion von Objekten, welcher wenigstens zwei magnetische Elemente (31 - 34) aufweist, die in einer Lagebeziehung angeordnet sind, welche eine Identität des Sensors darstellt, oder eines Objektes (20) an dem der Sensor befestigt ist, wobei die magnetischen Elemente elektromagnetisch erfaßbar sind, **dadurch gekennzeichnet, daß**

jedes magnetische Element (31 - 34) als ein Draht gebildet ist, der aus einer amorphen oder nanokristallinen Metallegierung hergestellt ist und eine Länge (11 - 14) hat, die von der Länge wenigstens eines weiteren magnetischen Elementes des Sensors (30) unterschiedlich ist, und

wenigstens eines der magnetischen Elemente einen Durchmesser hat, der von dem Durchmesser wenigstens eines weiteren magnetischen Elementes des Sensors (30) unterschiedlich ist;

wobei die Länge und der Durchmesser jedes Elementes benutzt werden, um die Identität des Sensors zu bilden.

10. Sensor nach Anspruch 9, bei dem der Durchmesser jedes magnetischen Elementes (31 - 34) 100 - 200 µm ist.

11. Sensor nach Anspruch 9, bei dem der Durchmesser jedes magnetischen Elementes (31 - 34) 7 - 55 µm ist.

12. Sensor nach einem der Ansprüche 9 bis 11, bei dem jedes magnetische Element (31 - 34) mit einem Überzug aus dielektrischem Material, so wie Glas, versehen ist.

13. Sensor nach einem der Ansprüche 9 bis 13, bei dem die amorphe oder nanokristalline Metallegierung jedes magnetischen Elementes (31 - 34) einen Riesen-Magnetoimpedanz-Effekt zeigt, wenn er elektromagnetischer Energie (50) hoher Frequenz und magnetischer Energie (Hmod) niedriger Frequenz ausgesetzt wird.

14. Sensor nach einem der Ansprüche 9 bis 13, bei dem die amorphe oder nanokristalline Metallegierung jedes magnetischen Elementes (31 - 34) einen Hauptanteil Kobalt hat.

15. Sensor nach einem der Ansprüche 9 bis 14, bei dem die Zusammensetzung der amorphen oder nanokristallinen Metallegierung jedes magnetischen Elementes (31- 34) $(Fe_{0.06}Co_{0.94})_{72.5}Si_{12.5}B_{15}$ ist.

16. Sensor nach einem der Ansprüche 9 bis 15, bei dem die magnetischen Elemente (41 - 44) parallel zu einander in dem Sensor (40) angeordnet sind.

17. Sensor nach einem der Ansprüche 9 bis 16, bei dem die magnetischen Elemente (31 - 34) unter einem Winkel zueinander in dem Sensor (30) angeordnet sind.

**Revendications**

1.  Procédé pour détecter des objets à distance, un objet individuel (20) étant muni d'un capteur (30) comprenant au moins un élément magnétique (31-34) ayant une forme géométrique prédéterminée et représentant une identification du capteur, dans lequel un premier signal électromagnétique (50) est généré pour exciter le ou chaque élément magnétique pour générer un second signal électromagnétique (60), dont une amplitude est modulée par un champ magnétique (Hmod) et dans lequel un signal de réponse (80) est généré par démodulation du second signal électromagnétique (60, 70), **caractérisé en ce qu'**il comprend les étapes consistant à :

    a) détecter une variation en amplitude ($\Delta$A) du signal de réponse (80) en réponse à une variation en amplitude ($\Delta$H) du champ magnétique (Hmod),

    b) déterminer, à partir du résultat de l'étape a), la longueur et le diamètre du ou de chaque élément magnétique (31-34), et

    c) déterminer, à partir du résultat de l'étape b), une identification du capteur (20).

2.  Procédé selon l'une quelconque des revendications précédentes, dans lequel le ou chaque élément magnétique (31-34) est réalisé sous forme d'un fil d'alliage métallique amorphe ou nanocristallin.

3.  Procédé selon l'une quelconque des revendications précédentes, dans lequel le capteur (20) comprend au moins deux éléments magnétiques (31-34) disposés dans une relation spatiale prédéterminée l'un par rapport à l'autre.

4.  Procédé selon la revendication 3, dans lequel lesdits au moins deux éléments magnétiques (31-34) ont des longueurs différentes.

5.  Procédé selon la revendication 3 ou 4, dans lequel lesdits au moins deux éléments magnétiques (41-44) sont disposés parallèlement l'un par rapport à l'autre dans le capteur (40).

6.  Procédé selon l'une quelconque des revendications 3-4, dans lequel lesdits au moins deux éléments magnétiques (31-34) sont disposés en formant un angle l'un par rapport à l'autre.

7.  Système pour détecter des objets à distance, où un objet individuel (20) est muni d'un capteur (30) comprenant au moins un élément capteur magnétique (31-34), le système comprenant des moyens émetteurs (11, 13) pour transmettre un premier signal électromagnétique (50) dans une zone de détection (10); des moyens récepteurs (12, 15) pour recevoir un second signal électromagnétique (60, 70), généré par le capteur en réponse au premier signal électromagnétique provenant des moyens émetteurs ; des moyens de modulation (16) pour générer un champ magnétique (Hmod) pour moduler le second signal électromagnétique durant la génération de celui-ci par le capteur; et des moyens de démodulation (15) pour générer un signal de réponse (80) par démodulation du second signal électromagnétique (70) tel que reçu par les moyens récepteurs, **caractérisé en ce qu'**il comprend des moyens de traitement (14) pour: détecter une variation en amplitude ($\Delta$A) du signal de réponse (80) en réponse à une variation en amplitude ($\Delta$H) du champ magnétique (Hmod) ; déterminer, à partir de la variation d'amplitude ainsi détectée, la longueur et le diamètre du ou de chaque élément magnétique (31-34), et déterminer, à partir de la propriété géométrique ainsi déterminée, une identification du capteur (30).

8.  Procédé pour déterminer une longueur (11-14) et un diamètre d'un élément magnétique allongé (31-34), **caractérisé en ce qu'**il comprend les étapes consistant à:

    exposer l'élément magnétique (31-34) à un rayonnement électromagnétique (50),

    exposer l'élément magnétique à un champ magnétique (Hmod) ayant une première amplitude,

    détecter une première amplitude d'un signal de réponse électromagnétique (60, 70) provenant de l'élément magnétique,

    exposer l'élément magnétique à un champ magnétique ayant une seconde amplitude,

    détecter une seconde amplitude d'un signal de réponse électromagnétique provenant de l'élément magnétique,

déterminer une première différence (ΔA) entre les première et seconde amplitudes du signal de réponse électromagnétique,

déterminer une seconde différence (ΔH) entre les première et seconde amplitude du champ magnétique, et

déterminer la longueur (11-14) et le diamètre de l'élément magnétique (31-34) à partir desdites première et seconde différences.

9. Capteur (30) pour détecter des objets à distance, comprenant au moins deux éléments magnétiques (31-34), qui sont disposés dans une relation spatiale représentant une identification du capteur ou d'un objet (20) auquel le capteur est fixé, lesdits éléments magnétiques étant détectables électromagnétiquement, **caractérisé en ce que** :

chaque élément magnétique (31-34) est réalisé sous forme d'un fil constitué par un alliage métallique amorphe ou nanocristallin et ayant une longueur (11-14) qui est différente de la longueur d'au moins un autre élément magnétique du capteur (30), et

au moins un des éléments magnétiques a un diamètre qui est différent du diamètre d'au moins un autre élément magnétique du capteur (30) ;

dans lequel la longueur et le diamètre de chaque élément sont utilisés pour former l'identification du capteur.

10. Capteur selon la revendication 9, dans lequel le diamètre de chaque élément magnétique (31-34) est de 100-200 μm.

11. Capteur selon la revendication 9, dans lequel le diamètre de chaque élément magnétique (31-34) est de 7-55 μm.

12. Capteur selon l'une quelconque des revendications 9 à 11, dans lequel chaque élément magnétique (31-34) est pourvu d'un revêtement de matériau diélectrique, tel que le verre.

13. Capteur selon l'une quelconque des revendications 9 à 12, dans lequel l'alliage métallique amorphe ou nanocristallin de chaque élément magnétique (31-34) présente un effet de magnéto-impédance géant quand il est exposé à une énergie électromagnétique (50) de haute fréquence et à une énergie magnétique (Hmod) de basse fréquence.

14. Capteur selon l'une quelconque des revendications 9 à 13, dans lequel l'alliage métallique amorphe ou nanocristallin de chaque élément magnétique (31-34) a une teneur majoritaire de cobalt.

15. Capteur selon l'une quelconque des revendications 9 à 14, dans lequel la composition de l'alliage métallique amorphe ou nanocristallin de chaque élément magnétique (31-34) est $(Fe_{0,06}Co_{0,94})_{72,5}Si_{12,5}B_{15}$.

16. Capteur selon l'une quelconque des revendications 9 à 15, dans lequel les éléments magnétiques (41-44) sont disposés parallèlement l'un par rapport à l'autre dans le capteur (40).

17. Capteur selon l'une quelconque des revendications 9 à 16, dans lequel les éléments magnétiques (31-34) sont disposés en formant un angle l'un par rapport à l'autre dans le capteur (30).

*FIG 1*

FIG 2

FIG 3

FIG 4

Amplitude (A) of reply signal

Amplitude (H) of $H_{mod}$

Length $l_3$ Slope $K_3$

Length $l_1=l_4$ Slope $K_1=K_4$

Length $l_2$ Slope $K_2$

$\Delta A_3$

$\Delta A_2$

$\Delta H$

*FIG 5*